# EUROPÄISCHE PATENTSCHRIFT

(11) **EP 1 563 262 B1**
(45) Veröffentlichungstag und Bekanntmachung des Hinweises auf die Patenterteilung: **18.04.2018**
(21) Anmeldenummer: 03772329.3
(22) Anmeldetag: 12.11.2003
(51) Int. Cl.: G01F 1/80, G01F 1/84

(54) **MESSVORRICHTUNG ZUR ERMITTLUNG DER DURCHSATZMENGE EINES MASSENSTROMES**
FLOW MEASURING DEVICE FOR DETERMINING THE MASS FLOW RATE OF A MASS FLOW
DISPOSITIF DE MESURE POUR DÉTERMINER LE DÉBIT D'UN ÉCOULEMENT MASSIQUE

(30) Priorität: 13.11.2002 DE 10253078
(43) Veröffentlichungstag der Anmeldung: 17.08.2005
(73) Patentinhaber: Schenck Process Europe GmbH, 64293 Darmstadt (DE)
(72) Erfinder: KAHLE, Jens, 63303 Dreieich (DE)
(86) Internationale Anmeldenummer: PCT/EP2003/012646
(87) Internationale Veröffentlichungsnummer: WO 2004/044533

(56) Entgegenhaltungen:
- EP-A- 0 474 121
- DE-A- 19 905 951
- GB-A- 739 840

## Beschreibung

Die Erfindung betrifft eine Meßvorrichtung zur Ermittlung der Durchsatzmenge eines Massestromes, insbesondere zur Messung eines Schüttgutstromes, gemäß dem Oberbegriff des Patentanspruchs 1.
Zur kontinuierlichen Ermittlung der Durchsatzmenge von Materialströmen, vorzugsweise Schüttgüterströmen, werden in der Praxis vor allem Förderbandwaagen, Meßschurren, Prallplatten oder Meßvorrichtungen nach dem Coriolis-Prinzip eingesetzt. Insbesondere zur hochgenauen Messung von Schüttgütern, wie Granulaten, gut fließenden Pulvern, Getreide und ähnlichen, werden vorzugsweise Massendurchflußmeßgeräte eingesetzt, die nach dem Coriolis-Prinzip arbeiten. Dabei nutzen diese Massendurchflußgeräte die Coriolis-Kraft zur Bestimmung der Förderstärke, die beim Transport von Schüttgutteilchen über ein rotierendes Flügelrad auftreten. Dabei besitzt das Flügelrad sternförmig angeordnete Leitschaufeln, durch die das Schüttgut, des mit konstanter Winkelgeschwindigkeit rotierenden Rades, nach außen beschleunigt wird. Die Coriolis-Beschleunigung, die bei der Bewegung der Schüttgutteilchen auftritt, hat ein Moment auf das Meßrad zur Folge, das dem Massendurchfluß proportional ist. Dieses Meßverfahren ist demzufolge geeignet, Schüttgutströme mit hoher Genauigkeit zu erfassen, da im Unterschied zu Prallplatten- und Meßschurrensystemen keine von den Schüttguteigenschaften beeinflußte physikalische Größe in die Empfindlichkeit des Gerätes eingeht. Allerdings besteht bei den Coriolis-Meßgeräten das Problem, daß die durch den Massestrom erzeugten Coriolis-Kräfte gegenüber den Radialbeschleunigungskräften und daraus resultierenden Störkräften sehr gering sind, so daß die Genauigkeit stark von der Entkopplung der Störkräfte im Meßstrang abhängig ist.

Eine bekannte Meßvorrichtung zur Ermittlung des Massedurchflusses von Schüttgütern nach dem Coriolis-Prinzip ist aus der DE 33 46 145 C2 bekannt. Diese Meßvorrichtung besitzt ein Flügelrad mit radial angeordneten Leitschaufeln, die auf einem horizontalen Teller angeordnet sind. Das Flügelrad ist mit einer Antriebswelle verbunden, die von einem Motor mit konstanter Drehzahl angetrieben wird. Der Motor ist in zwei Kugellagern drehbar gelagert und stützt sich auf einen Kraftaufnehmer ab, der das Antriebsmoment erfaßt. Dieses ist im Prinzip proportional zum Massestrom und kann in einer Auswertevorrichtung als Förderstärke oder als Fördermenge angezeigt werden. In diesem drehbar angeordneten Meßstrang aus Kraftmeßvorrichtung, drehbar gelagertem Antriebsmotor und angetriebenem Flügelrad treten aber in den Kugellagern als auch in den Abdichtungen der Antriebswelle Reibungskräfte auf, die in dem Meßwert enthalten sind und diesen insbesondere bei sich ändernden Reibungswerten zu Meßungenauigkeiten führen können.

Aus der EP 0 474 121 B1 ist eine weitere Massendurchflußmeßvorrichtung nach dem Coriolis-Prinzip bekannt, die zur Verringerung der Reibungskräfte im Antriebsstrang ein Meßgetriebe besitzt. Dazu ist die Antriebswelle des Flügelrades durch eine ortsfeste Hülse zum Meßgetriebegehäuse geführt. Im Meßgetriebegehäuse ist an der Antriebswelle ein Antriebsstirnrad angebracht, das in Eingriff mit einem Zwischenstirnrad und einem Treibstirnrad steht, das an der Antriebswelle des Motors angebracht ist. Das Zwischenstirnrad ist tangential beweglich aufgehängt und mit einer Kraftmeßvorrichtung verbunden, die die Tangentialkraft erfaßt, die proportional dem Massedurchfluß ist. Zur Vermeidung der Reibungskräfte im Meßstrang ist die Antriebswelle unterhalb des Antriebsstirnrades in einem Wälzlager befestigt, dessen Innenring mit der Antriebswelle und dessen Außenring mit dem Innenring eines zweiten Wälzlagers verbunden ist. Dabei wird der Außenring des ersten Wälzlagers über zusätzliche Stirnräder separat angetrieben, wobei eine Antriebsdrehzahl vorgeschlagen wird, die mindestens der Antriebsdrehzahl der Antriebswelle entspricht. Dadurch wird aber lediglich die Reibungskraft des ersten Wälzlagers im Meßstrang kompensiert, wobei die mit hoher Drehzahl in der Hülse umlaufende Antriebswelle noch zusätzliche Lagerreibungen verursachen dürfte. In der Praxis wird diese Lagerreibung in der Hülse zum Schüttgutgehäuseteil durch aus der DE 35 07 993 C2 bekannte Luftlagerungen gering gehalten, die aber einen sehr hohen Fertigungsaufwand und einen separaten Druckluftanschluß erfordern. Allerdings sind auch bei derartigen Luftlagerungen Reibungseinflüsse nicht ausgeschlossen, insbesondere wenn es bei stark schwankenden Massenstromänderungen oder ungleichmäßiger Beladung des Flügelrades zu einseitigen Radialbeschleunigungen kommt, durch die das Flügelrad eine Unwucht erfährt, wobei die Antriebswelle die Lagerhülse berühren kann. Weiterhin können auch Druckschwankungen im Schüttgutbehälter zum Eindringen von stark abrasiven Schüttgutstäuben in den Lagerbereich führen, durch den Reibungsänderungen im Meßpfad auftreten.

Aus der DE 100 41 433 C2 ist eine Coriolis-Meßvorrichtung zur Erfassung von Schüttgutströmen bekannt, bei der die Antriebswelle vom Meßgetriebegehäuse bis ins Schüttgutgehäuse von einer ortsfesten Hülse umgeben ist, die offensichtlich das Lagergehäuse eines Gleitlagers darstellt. Diese Lagerhülse ist bis in eine paßgenaue Aussparung im Flügelradteller geführt, so daß das Antriebswellenlager gegen eintretende Schüttgutstäube weitgehend geschützt ist. Allerdings muß auch der Übergang von der Lagerhülse zur Antriebswelle zusätzlich staubdicht verschlossen werden, wodurch eine zusätzliche Reibung im Meßpfad entsteht, die auch von der Größe des Schüttgutstromes abhängt. Weiterhin läuft die Antriebswelle mit relativ hoher Drehzahl in der ortsfesten Lagerhülse um, wodurch eine zusätzliche lastabhängige Lagerreibung im Meßstrang erzeugt wird. Da diese im Meßstrang befindlichen Reibungseinflüsse sowohl durch schwankende Temperatureinflüsse als auch durch eintretende Schüttgutstäube und ungleichmäßige Flügelradbelastung nicht konstant zu halten sind, können diese auch durch eine Kalibrierung nicht vollständig kompensiert werden, so daß die Meßgenauigkeit sich durch diese Reibungseinflüsse verändern kann.

Der Erfindung liegt deshalb die Aufgabe zugrunde, die Meßgenauigkeit von Massenstrommeßvorrichtungen nach dem Coriolis-Prinzip zu verbessern und dabei insbesondere auch bei unterschiedlichen Betriebsweisen und Umweltbedingungen zumindest konstant zu halten.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß zwischen der bis in den Flügelradgehäuseraum ragenden Lagerhülse und der Antriebswelle nahezu keine Relativgeschwindigkeit auftritt, so daß in diesem Teil des Meßstrangs keine reibungsbehaftete Abdichtung erfolgen muß. Dadurch kann auch beim Eintritt von abrasiven Schüttgutstäuben oder bei starken Temperaturänderungen des Schüttguts keine zusätzliche Reibung auftreten, die die Meßgenauigkeit verändert. Das hat gleichzeitig den Vorteil, daß es auch auf eine möglichst reibungsfreie Lagerung mit aufwendigen Wälz- oder Luftlagerungen und konstanten Umgebungsbedingungen im Grunde nicht ankommt. Da der Meßstrang durch die angetriebene Hülse reibungsmäßig entkoppelt ist, können die Lagerreibungskräfte der Hülse weder gegenüber dem Gehäuse noch gegenüber der Antriebswelle das Meßergebnis verfälschen. Das hat auch den Vorteil, daß die Lagerung der angetriebenen Hülse mit einfachen Mitteln ausführbar ist und keine besondere Aufmerksamkeit auf die Reibung bei der Abdichtung zwischen dem Schüttgutgehäuse und der Lagerhülse gelegt werden muß, so daß auch einfache reibungsbehaftete Abdichtungen einsetzbar sind. Da der Meßstrang vom Flügelrad über die Antriebswelle bis zum Antriebsstirnrad reibungsfrei läuft, können auch bei Leerlauf kaum Drehmomentschwankungen auftreten, durch die eine hohe Nullpunktkonstanz erreichbar ist, die vorteilhafterweise auch ein kleines Antriebsstirnrad mit großer Kraftübertragung auf die Meßeinrichtung gestattet, wodurch eine hohe Meßsignalauflösung erreichbar ist.

Bei einer besonderen Ausbildung der Erfindung ist vorgesehen, die Lagerung der Antriebswelle in der Hülse mit Federelementen auszuführen, die in Drehrichtung biegeweich und in Radialrichtung biegehärt sind. Dies hat den Vorteil, daß kein Lagerspiel als auch keine Reibmomente bei Beginn einer geringen Relativbewegung zwischen der Antriebswelle und der Lagerhülse auftreten können, so daß auch bei sehr geringen Durchflußraten oder geringen Massenflußänderungen hohe Meßgenauigkeiten erreichbar sind. Gleichzeitig ist dabei vorteilhaft, daß diese Meßvorrichtung über einen sehr großen Temperaturbereich betreibbar ist, da auch geringe Relativbewegungen insbesondere bei sehr niedrigen Temperaturen keinerlei Reibung zwischen der Antriebswelle und der Lagerhülse verursachen können, so daß auch über einen hohen Temperaturbereich eine hohe Meßgenauigkeitskonstanz erzielbar ist.

Die Erfindung wird anhand eines Ausführungsbeispiels, das in der Zeichnung dargestellt ist, näher erläutert. Es zeigen:
- Fig. 1:: ein Schnittbild in Seitenansicht einer schematisch dargestellten Meßvorrichtung mit gleitgelagerter Antriebswelle;
- Fig. 2:: eine schematische Draufsicht auf ein Meßgetriebe einer Meßvorrichtung mit einer radialen Kraftübertragung auf einen. Kraftaufnehmer, und
- Fig. 3:: ein Schnittbild in Seitenansicht einer schematisch dargestellten Meßvorrichtung mit blattfedergelagerter Antriebswelle.

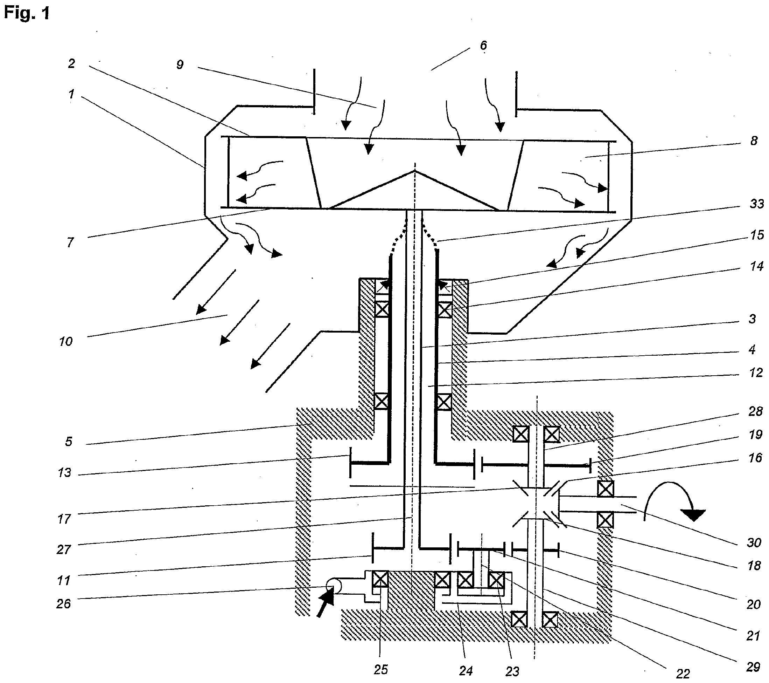

In Fig. 1 der Zeichnung ist eine Meßvorrichtung zur Erfassung von Schüttgutströmen nach dem Coriolis-Prinzip schematisch dargestellt, die im wesentlichen aus einem Gehäuseteil 1, in dem ein Flügelrad 2 rotiert, und einer darunter angeordneten Antriebs- und Meßvorrichtung besteht, dessen Antriebswelle 3 durch eine angetriebene Lagerhülse 4 in das Flügelradgehäuse 1 ragt, und das die Lagerhülse 4 drehbar in einem ortsfesten Getriebegehäuse gelagert ist.

Im Meßbetrieb gelangt der Schüttgutstrom 9 als Massestrom durch eine Eintrittsöffnung 6 axial auf das Flügelrad 2, das aus einem horizontal angeordneten Teller 7 mit radialen Leitblechen 8 besteht und durch das das axial auftreffende Schüttgut 9 radial nach außen umgelenkt wird. Durch das mit konstanter Drehzahl umlaufende Flügelrad 2 wird der Schüttgutstrom 9 radial nach außen beschleunigt, wodurch aufgrund der Coriolis-Kraft ein Bremsmoment erzeugt wird, das dem Massestrom 9 proportional ist. Zum staubdichten Meßbetrieb ist das Flügelrad 2 in einem umschlossenen Gehäuseteil 1 untergebracht, das im unteren Bereich eine seitliche Austrittsöffnung 10 besitzt, durch die das erfaßte Schüttgut 9 einem nachfolgenden Prozeß zuführbar ist.

Das Flügelrad 2 ist rotationssymmetrisch ausgebildet und besitzt eine zentrale Antriebswelle 3, die vertikal angeordnet ist und an seinem unteren Ende ein Antriebsstirnrad 11 aufweist. Die Antriebswelle 3 ist koaxial von einer Lagerhülse 4 umgeben, die vom Flügelradgehäuse bis in das darunterliegende Meßgetriebegehäuse 5 verläuft. Die Lagerhülse 4 ist im wesentlichen rohrförmig ausgebildet und erstreckt sich in axialer Länge zur Antriebswelle 4 und bildet mit dieser ein Gleitlager. Die Lagerhülse 4 erstreckt sich mindestens auf einer vertikalen Länge, in der die Antriebswelle 3 mindestens als Zweipunktlagerung geführt ist. Dabei sind auch vergleichbare Lagerungen denkbar, durch die die Antriebswelle mindestens teilweise drehbar in der Lagerhülse 4 angeordnet ist.

Die Lagerhülse 4 ihrerseits ist ebenfalls drehbar in dem ortsfesten Meßgetriebegehäuse 5 gelagert und an seinem Ende im Getriebegehäuse 5 mit einem Lagerhülsenantriebsstirnrad 13 als Antriebsvorrichtung verbunden. Die Lagerhülse 4 ist durch zwei Kugellager 14 im Getriebegehäuse 5 gelagert und zum Flügelradgehäuse 1 mittels eines Dichtelements 15 staubdicht abgedichtet. Das Dichtelement 15 kann auch im Kugellager 14 integriert sein oder als O-Ringdichtung ausgebildet werden. Da weder das Kugellager 14 noch das Dichtelement 15 mit der vermessenen Antriebswelle 4 in Berührung kommt, sind dessen Reibungswerte unbeachtlich, so daß diese vorteilhaft so bemessen sein können, daß sie hauptsächlich eine hervorragende Abdichtwirkung auch gegenüber abrasiven Schüttgutstäuben aufweisen.

Im Getriebegehäuse 5 ist zum gemeinsamen Antrieb der Lagerhülse 4 und der Antriebswelle 3 ein Kegelradgetriebe vorgesehen. Dies gestattet vorteilhafterweise einen horizontalen Antrieb, durch den eine geringe Bauhöhe erreichbar ist. Dieses Kegelradgetriebe besteht aus einem von einem nicht dargestellten Motor angetriebenen Antriebskegelrad 16, das mit zwei weiteren Kegelrädern 17, 18 kämmend in Eingriff steht. Die beiden Kegelräder 17, 18 sind horizontal gegenüberliegend angeordnet und jeweils mit einer oberen 28 und unteren Welle 29 verbunden. Auf der oberen Kegelradwelle 28 ist ein oberes Treibstirnrad 19 als separates Antriebsmittel angeordnet, das mit dem Hülsenantriebsstirnrad 13 in Eingriff steht und dieses mit einer konstanten vorgegebenen Drehzahl antreibt.

Die untere Welle 29 ist ebenfalls mit einem unteren Treibstirnrad 20 verbunden, das mit einem Zwischenstirnrad 21 kämmend in Eingriff steht. Andererseits steht das Zwischenstirnrad 21 an der horizontal gegenüberliegenden Seite mit dem Antriebsstirnrad 11 in Eingriff und treibt dieses mit einer vorgegebenen konstanten Drehzahl an, die der Drehzahl der Lagerhülse 4 entspricht. Dadurch wird im Idealfall erreicht, daß zwischen der Antriebswelle 3 und der Lagerhülse 4 keine Relativgeschwindigkeit besteht, obwohl beide gegeneinander verdrehbar sind. Das Zwischenstirnrad 21 ist mit einer Zwischenwelle 22 verbunden, die mittels eines Kugellagers 23 in einem horizontalen Kraftübertragungsarm 24 gelagert ist. Dieser Kraftübertragungsarm 24 ist unterhalb des Antriebsstirnrades 11 um einen Drehpunkt, der die Verlängerung der Drehachse 27 darstellt, drehbar gelagert und stützt sich an seinem anderen Ende auf einem Kraftaufnehmer 26 radial ab. Dieser Kraftaufnehmer 26 ist vorteilhafterweise als Doppelbiegebalken oder als rotationssymmetrische Wägezelle ausgebildet, auf die sich das radial wirkende Bremsmoment im Meßstrang abstützt. Dabei besteht der Meßstrang aus dem Flügelrad 2, der Antriebswelle 3, dem Antriebsstirnrad 11, dem Zwischenstirnrad 21 mit Zwischenwelle 22 und reibungsarmen Kugellager 23 als auch dem Kraftübertragungsarm 24, der sich auf die Wägezelle 26 abstützt. Da die Wägezelle 26 als Dehnungsmeßstreifenaufnehmer ausgebildet ist, wird das dem Massestrom proportionale Bremsmoment durch eine geringfügige radiale Auslenkung des Zwischenstirnrades 21 und des Kraftübertragungsarmes 24 erfaßt, die dem Bremsmoment proportional ist. Dabei sind Meßwege an der Wägezelle 26 von 0,1 bis 0,5 mm üblich.

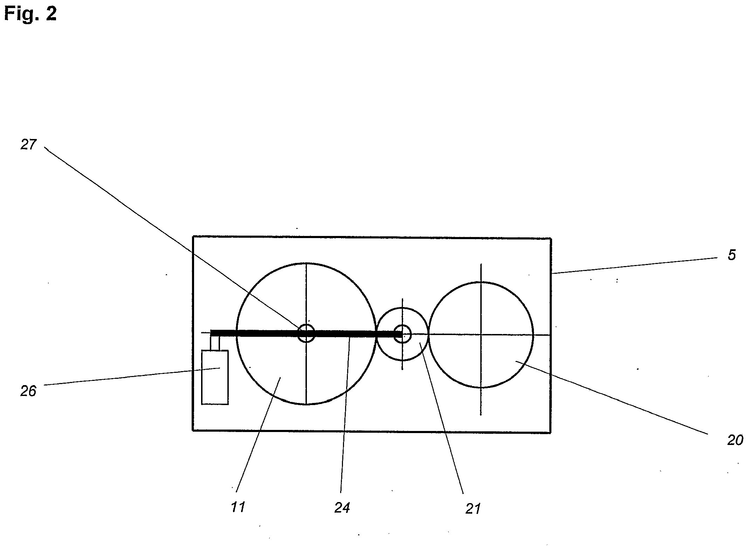

Die Funktion der Meßvorrichtung wird anhand der Draufsicht auf das Meßgetriebe nach Fig. 2 der Zeichnung erläutert. In Fig. 2 der Zeichnung ist das untere Treibstirnrad 20 dargestellt, das kämmend das Zwischenstirnrad 21 antreibt, welches an seiner horizontal gegenüberliegenden Seite kämmend in das Antriebsstirnrad 11 eingreift und dieses mit konstanter Drehzahl antreibt. Dabei ist das Zwischenstirnrad 21 mit seiner Lagerung an einem langgestreckten radial auslenkbaren Kraftübertragungsarm 24 aufgehängt, der im Drehpunkt senkrecht zur Drehachse 27 drehbar gelagert ist und sich radial auf die Kraftmeßvorrichtung 26 abstützt.

Im Leerlaufbetrieb, wenn kein Schüttgutstrom 9 auf das Flügelrad 2 geleitet wird, muß durch das untere Treibstirnrad 20 das Zwischenstirnrad 21 und das Antriebsstirnrad 11 lediglich ein Antriebsmoment aufgebracht werden, das der Reibung im Meßstrang entspricht. Da durch die synchron mit der Antriebswelle 3 umlaufende Lagerhülse 4 keine Reibung in diesem Teil des Meßstrangs entsteht, sind lediglich die Lagerreibungen an dem kämmenden Zwischenstirnrad 21 und dessen Lagerungen sowie die Lagerungen am Kraftübertragungsarm 24 aufzubringen. Die in diesem Teil entstehenden Reibungen sind verhältnismäßig gering, da diese Teile des Meßstrangs in Gleitmitteln laufen und durch eine verhältnismäßig hohe Drehzahl mit minimalen Reibungsverlusten betrieben werden. In diesem Teil des Meßgetriebes 5 treten üblicherweise auch keine nennenswerten Temperaturschwankungen auf, so daß die Viskositätsunterschiede der Gleitmittel vernachlässigbar sind, wodurch ein sehr konstantes Leerlaufreibungsmoment entsteht. Dieses geringe Reibungsmoment wirkt durch das radial verschwenkbare Zwischenstirnrad 21 mit konstantem Leerlaufantriebsmoment auf die Kraftmeßvorrichtung 26. Durch eine Tarierung der Meßvorrichtung wird dieses konstante Leerlaufdrehmoment kompensiert, so daß sich durch die reibungsfreie Antriebswellenlagerung eine hohe.Nullpunktkonstanz ergibt.

Wird nun ein Schüttgutstrom 9 axial auf das Flügelrad 2 aufgegeben, entsteht durch die Umlenkung eine radiale Beschleunigung des Schüttgutstromes 9, durch den eine Coriolis-Kraft an der Welle 3 ein zusätzliches Bremsmoment erzeugt, das dem Massestrom direkt proportional ist. Dadurch wird das mit der Antriebswelle 3 in Eingriff stehende Zwischenstirnrad 21 radial ausgelenkt und überträgt über den drehbar gelagerten Kraftübertragungsarm 24 dieses Bremsmoment auf den Kraftaufnehmer 26. Die durch diesen erfaßte Kraft stellt somit einen Wert für den über das Flügelrad 2 laufenden Massestrom 9 dar. Über die bekannten geometrischen Abmessungen des Flügelrades 2 sowie der Übersetzungen im Meßgetriebe 5 ist mit Hilfe einer nicht dargestellten Auswertevorrichtung die Förderstärke oder Fördermenge des über das Flügelrad 2 laufenden Massestromes ermittel- und anzeigbar.

Theoretisch ergibt sich bei konstanter Antriebsdrehzahl des Flügelrades 2, daß das erforderliche Antriebsdrehmoment genau dem Massendurchsatz proportional ist. Dies wird allerdings in der Praxis noch von zusätzlichen Bremsmomenten beeinflußt, die durch Reibungseinflüsse im Meßstrang entstehen. Dabei wird die Meßgenauigkeit insbesondere durch schwankende Reibungseinflüsse verschlechtert, da diese nicht durch Kalibriermaßnahmen erfaßbar sind. So können insbesondere Viskositätsunterschiede bei gleitmittelbetriebenen Lagerungen nur schwer erfaßt wehrden, da dies sehr von der Außentemperatur oder der Schüttguttemperatur abhängig ist. Allerdings hat sich in der Praxis gezeigt, daß insbesondere die Viskositätsunterschiede im Meßgetriebe vernachläßigbar sind, da derartige Coriolis-Meßgeräte vorzugsweise bei Raumtemperatur eingesetzt werden und sich dabei im Meßgetriebe kaum Viskositätsunterschiede zeigen. Da im Meßgetriebebereich 5 auch kaum Verunreinigungen im Lagerbereich auftreten, weil dort keine schwer abdichtbaren Lagerabdichtungen notwendig sind, ist die Reibung in diesem Bereich praktisch konstant.

Allerdings entstehen sehr stark schwankende Reibmomente an der Flügelradlagerung im Flügelradgutgehäuse 1, da durch schwankende und unsymmetrisch auftreffende Schüttgutströme 9 phasenweise unwuchtige Rotationen erzeugt werden. Dadurch können auch ungleiche Reibmomente bei weitgehend reibungsfreien Luftlagerungen entstehen, da bei stark ungleicher Beladung des Flügelrades 2 partielle Unwuchtwirkungen im Lagerbereich auftreten, die zu kurzzeitigen Berührungen der Lagerstelle führen können. Insbesondere verändert sich die Lagerreibung im Schüttgutbereich häufig dadurch, daß auf Dauer ein Schüttgutstaubeintritt nur schwer verhindert werden kann. Da die erfaßten Coriolis-Kräfte im Verhältnis zu den entstehenden Unwuchtkräften relativ gering sind, führen insbesondere derartige Schwankungen im Meßstrang im Bereich der Flügelradgehäuselagerung zu relativ großen Meßfehlern, weil in diesem Bereich größere Unwuchten auftreten und Verschmutzungen die Lager angreifen.

Dieses Problem wird durch die erfinderische Maßnahme dadurch gelöst, daß im Meßstrang bei der Antriebswellenlagerung 12 beim Übergang zum Flügelradgehäuse 1 alle Reibungseinflüsse gänzlich ausgeschaltet werden. Dies wird dadurch erreicht, daß im Schüttgutraum zwischen der Antriebswellenlagerung 12 und der Lagerhülse 4 durch dessen separaten Antrieb 13, 19, 17 keine Relativbewegung entsteht, so daß die Antriebswelle 3 in ihrer gesamten Länge reibungsfrei gelagert ist. Dabei kommt es insbesondere auch nicht auf die Art dieser drehbaren Lagerung zwischen der Antriebswelle 3 und der Lagerhülse 4 an, so daß auch einfache Lagerungen vorgesehen werden können. Hingegen verlegt die Erfindung die Reibungseinflüsse in den Bereich zwischen den Außenmantel der Lagerhülse 4 und den ortsfesten Gehäuseteil 5. Dadurch wird im Grunde die Antriebswelle 3 bis in das Flügelradgehäuseteil 1 von Reibungseinflüssen entkoppelt, weil die reibungsbehaftete Lagerung 14, 15 der Hülse 4 nicht im Meßstrang angeordnet ist. Es ist daher nahezu ausgeschlossen, daß Reibungseinflüsse an den Abdichtungen 15 und eintretende Schüttgutstäube die Meßgenauigkeit beeinflussen können. Deshalb sind auch in diesem Bereich vorkommende Temperaturschwankungen beim Schüttgut für die Meßgenauigkeit im Grunde unbeachtlich, da hierdurch zwar die Lagerreibung zwischen der Lagerhülse 4 und dem Getriebegehäuse 5 schwankt, dies aber nicht das erfaßbare Antriebsmoment beeinflußt, das auf den Kraftaufnehmer 26 im Meßstrang wirkt. Deshalb können vorteilhafterweise an der Lagerung 14 zwischen der Hülse 4 und dem Getriebegehäuseteil 5 auch reibungsbehaftete Abdichtmaßnahmen vorgesehen werden, die eine dauerhafte Abdichtung bei Schüttgütern mit stark abrasiven Staubanteilen gewährleisten. Insbesondere wird durch die erfindungsgemäße reibungsfreie Antriebswellenlagerung 12 auch die Meßgenauigkeit bei großen Masseströmen 9 verbessert, da die relativ hohe Flügelraddrehzahl auch bei geringeren Schüttgutschwankungen und ungleicher Flügelradbeladung zu relativ starken Unwuchten neigen, die sich hier nicht im Meßstrang auswirken können. Deshalb hat die Erfindung zusätzlich noch den Vorteil, daß die Meßvorrichtung mit verhältnismäßig hohen Flügelraddrehzahlen betrieben werden kann, so daß bei kompakter Bauweise hohe Durchsatzmengen erreichbar sind. Desweiteren erlaubt eine derart reibungsfreie Lagerung 12 des Meßstrangs bis in das Flügelradgehäuse hinein einen kleinen Antriebsstirnraddurchmesser im Verhältnis zum Flügelraddurchmesser, durch den eine höhere Meßsignalausbeute zu erzielen ist, da reibungsbedingte Bremsmomentschwankungen im Meßstrang nicht auftreten. Dadurch ist auch bei kleinen Schüttgutströmen 9 eine hohe Nullpunktkonstanz gewährleistet.

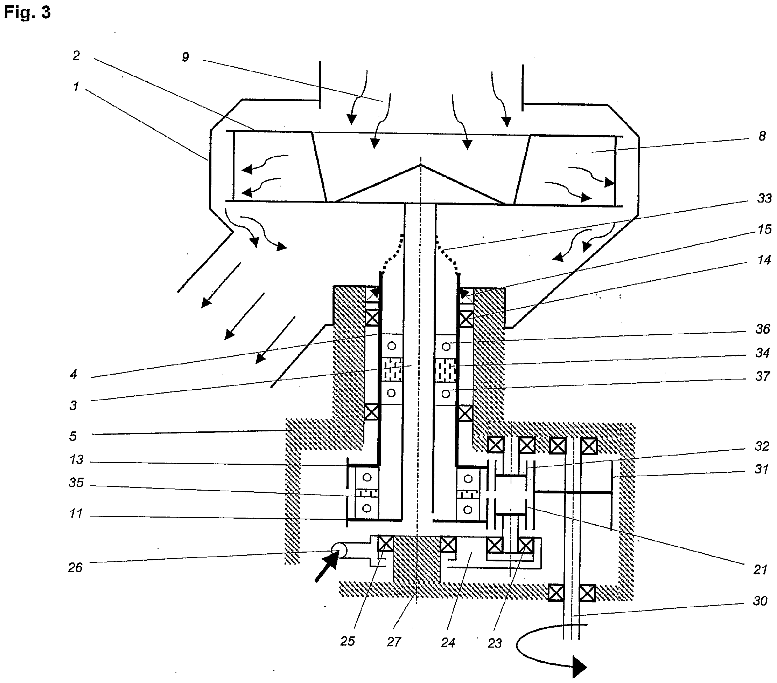

Eine weitere vorteilhafte Ausführungsform der Erfindung ist in Fig. 3 der Zeichnung dargestellt. Die Erfindung nach der Ausführung gemäß Fig. 3 unterscheidet sich von dem Ausführungsbeispiel in Fig. 1 hauptsächlich dadurch, daß das Gleitlager 12 zwischen Antriebswelle 3 und Lagerhülse 4 durch die Anordnung spezieller Blattfederelemente 34, 35 ersetzt sind. Bei der Ausführung nach Fig. 1 der Zeichnung entsteht auch bei gleicher Drehzahl der umlaufenden Welle 3 und Lagerhülse 4 bei einer Massenstromänderung eine geringe Relativbewegung zwischen Welle 3 und Hülse 4, die zur Meßsignalerfassung auf die Kraftmeßvorrichtung 26 übertragen wird. Bei einem gleichbleibenden Massenfluß 9 über das Flügelrad 2 laufen sowohl die Antriebswelle 3 als auch die Lagerhülse 4 exakt synchron um, so daß bei einem derartigen Meßbetrieb keine Relativbewegung zwischen Antriebswelle 3 und Hülse 4 vorhanden ist. Erfolgt allerdings eine Änderung des Massenflusses 9, so entsteht auch ein größeres oder geringeres Bremsmoment, das auf die Kraftmeßvorrichtung 26 wirkt. Da diese als Dehnungsmeßstreifenaufnehmer ausgebildet ist, wird die Kraftänderung nicht wegfrei erfaßt, sondern im Verformungskörper des Kraftaufnehmers 26 führt die Krafteinwirkung zu einer Wegänderung. Diese Wegänderung bei derartigen Kraftaufnehmern 26 oder Wägezellen beträgt zwischen meist 0,1 und 0,5 mm und bewirkt eine Relativbewegung oder Verdrehung der Antriebswelle 3 gegenüber der Lagerhülse 4. Je nach den Abmessungen der Getrieberaddurchmesser und der Hebelarmlängen des Kraftübertragungsarmes 24 können dabei Relativverdrehungen von ca. 1 bis 3° auftreten. Bei einer Massendurchsatzänderung müssen bei einer dadurch bewirkten Verdrehung die Auflagerflächen bei Gleit- oder Wälzlagern aus ihrer Ruhelage bewegt werden. Dazu ist ein sogenanntes "Abrißmoment" zu überwinden, das beispielsweise bei Gleit- und Wälzlagern durch eine hohe Reibungszahl bei einer Anfangsbewegung aus der Ruhelage entsteht. Alle diese vorgenannten Lager haben die Eigenschaft, daß zunächst ein hohes Reibmoment überwunden werden muß, das mit zunehmender Relativbewegung oder Drehzahl auf ein Minimum sinkt, um dann wieder leicht anzusteigen. Da dieses "Abrißmoment" von der Relativbewegung 0 bis zu einer maximalen Relativgeschwindigkeit ein stark nicht lineares Verhalten aufweist, kann dieses sogenannte Abrißmoment gerade bei geringen Förderstärkenschwankungen zu einer Meßungenauigkeit führen, die für viele Fälle vermieden werden soll.

Weiterhin besitzen Gleit- und Wälzlager konstruktionsbedingt immer ein gewisses Lagerspiel, das insbesondere bei geringen Mässenstromschwankungen nahe dem Leerlaufbetrieb zu einer Nullpuktinstabilität führt, die nicht tarierbar ist und eine Meßungenauigkeit darstellt. Deshalb schlägt diese weitere Ausführungsform der Erfindung vor, zwischen der Lagerhülse 4 und der Antriebswelle 3 mindestens drei Blattfederelemente 34, 35 als Federelementenlagerung vorzusehen, die in Drehrichtung biegeweich und in Tangential- und Axialrichtung biegesteif sind. Derartige Federelemente 34, 35 haben den Vorteil, daß sie kein Lagerspiel aufweisen und in Drehrichtung ein lineares elastisches Verhalten aufweisen, so daß auch bei geringen Schüttgutschwankungen eine Relativbewegung der Welle 3 zur Lagerhülse 4 erfolgt, die dem Massestrom proportional ist.

Das Ausführungsbeispiel der Meßvorrichtung nach Fig. 3 der Zeichnung weist folgende Funktion auf:
Durch einen vertikal angeordneten Antrieb 30 wird ein doppeltes Treibstirnrad 31 mit einer konstanten Drehzahl beaufschlagt. Dieses treibt sowohl ein oberes Zwischenstirnrad 32 als separates Antriebsmittel als auch ein unteres Zwischenstirnrad 21 an, die gleiche Durchmesser besitzen und mit dem Antriebsstirnrad 11, 13 der Antriebswelle 3 und der Lagerhülse 4 kämmend in Verbindung stehen. Dadurch werden sowohl die Lagerhülse 4 als auch die Antriebswelle 3 mit gleicher Drehzahl angetrieben, so daß zwischen beiden im Grunde keine Relativbewegung stattfindet. Die Lagerhülse 4 ist mittels zweier Kugellager 14 und Abdichtmitteln 15 in einem ortsfesten Getriebegehäuse 5 drehbar gelagert und bis ins Flügelradgehäuse 1 geführt. Die Lagerhülse 4 ist im Flügelradgehäuse 1 durch eine elastische Gummibalgdichtung 33 gegen eintretende Schüttgüter oder Schüttgutstäube abgedichtet, die mindestens in Drehrichtung biegeelastisch ist.

Beim Massedurchfluß von Schüttgütern 9 erzeugen diese auf dem Flügelrad 2 wiederum ein Bremsmoment, das dem Massedurchfluß proportional ist. Dieses Bremsmoment wirkt auf die Antriebswelle 3, die durch das radial beweglich aufgehängte Zwischenstirnrad 21 angetrieben wird, das sich um den Drehpunkt 27 radial auf die Kraftmeßvorrichtung 26 abstützt. Die Kraftmeßvorrichtung 26 ist eine mit Dehnungsmeßstreifen bestückte Wägezelle, die bei Krafteinwirkung eine radiale Bewegung von etwa 0,1 bis 0,5 mm zuläßt. Dadurch ist während des Meßbetriebs eine gewisse Relativbewegung der Antriebswelle 3 in der Lagerhülse 4 notwendig. Diese wird nahezu reibungsfrei durch die im Meßstrang angeordneten Federelemente 34 gewährleistet. Vorzugsweise ist deshalb im oberen Bereich der Lagerhülse 4 nahe dem Flügelradgehäuse eine aus mindestens drei Blattfederelementen 34 ausgebildete Lagerung vorgesehen. Die Federelemente 34 bestehen vorzugsweise aus einem elastischen Federstahl, der symmetrisch um die Antriebswelle 3 angeordnet ist. Diese Blattfederelemente 34 sind aus einem dünnen Federstahlblech von vorzugsweise 0,5 bis 1,5 mm Dicke hergestellt, der in Biegerichtung elastisch und biegweich ausgebildet ist. In radialer Richtung sind diese Federelemente 34 starr und damit biegesteif, so daß sowohl die Antriebswelle 3 als auch die Lagerhülse 4 um eine stabile Drehachse 27 rotieren. Dazu sind die Federelemente 34 oben an einem Befestigungsflansch 36 oder - ring angeschraubt, der mit der Antriebswelle 3 und unten an einen weiteren Antriebsflansch 37 oder -ring befestigt, der mit der Lagerhülse 4 verbunden ist.

Zur Verbesserung der Lagerung und Führung der Antriebswelle 3 sind zwischen dem Antriebsstirnrad 11 der Welle 3 und dem Lagerhülsenantriebsstirnrad 13 mindestens drei weitere Blattfederelemente 35 angeordnet, die ebenfalls in Biegerichtung biegeweich und in radial- und axialer Richtung biegesteif sind. Durch diese beiden axial beabstandeten Blattfederlagerungen 34, 35 ist die Antriebswelle 3 gegenüber der Lagerhülse 4 um bis zu 5° verdrehbar, der zur Ausnutzung des radialen Meßweges der Wägezelle 26 ausreicht und im relevanten Bereich eine konstante Federrate in Drehrichtung aufweist, die bei der Auswertung des Meßsignals kompensiert werden kann. Da diese Blattfederlagerung 34, 35 auch bei einer Verdrehung aus einer Ruhelage zwischen Lagerhülse 4 und Antriebswelle 3 reibungsfrei ist, sind auch bei sehr geringen Schüttgutschwankungen sehr hohe Meßgenauigkeiten möglich. Dies gilt vorzugsweise auch bei sehr kleinen Masseströmen, dessen Bremsmoment sich nur geringfügig von dem Leerlaufbremsmoment unterscheidet. Eine derartige Meßvorrichtung weist daher auch eine verbesserte Nullpunktkonstanz auf und dies insbesondere auch bei kleinen Antriebsstirnraddurchmessern gegenüber dem Flügelraddurchmesser.

Bei dieser weiteren vorteilhaften Ausführungsform der Erfindung treten im Meßstrang lediglich noch Reibungen am Zwischenstirnrad 21 und dem Drehpunktlager 25 des Kraftübertragungsarmes 24 auf. Da die Lager des Zwischenstirnrades 21 mit konstanter Drehzahl angetrieben werden, sind diese in ihrem Reibungsminimum betreibbar und zumindest bei üblicher Raumtemperatur konstant, so daß sie bei einer Kalibrierung kompensierbar sind. Bei dem Drehpunktkugellager 25, das auch mit verhältnismäßig hohen Reibwerten bei der Drehbewegung aus einer Ausgangslage belastet ist, kann dessen Reibmoment aber wegen der großen Hebelarmlängen zum Drehpunkt 27 vernachlässigt werden. Allerdings kann bei einer weiteren vorteilhaften Ausbildungsform diese Lagerung 25 wegen des geringen Drehweges auch durch Blattfederelemente vorgesehen sein. Bei einem derartigen Ausführungsbeispiel befindet sich dann im Meßstrang mit seinem Flügelrad 2, der Antriebswelle 3 mit dem Antriebsstirnrad 11, dem Zwischenstirnrad 21 mit dessen Lagerung im Hebelarm 24 und der anschließenden Drehpunktlagerung 25 und der Wägezelle 26 nur noch am Zwischenstirnrad 21 ein reibungsbehaftetes Kugellager 23. Da dieses in einem relativ gleichbleibenden Temperaturbereich und in einem Reibungsminimum betreibbar ist, kann sich diese Reibung nur verschleißbedingt ändern. Allerdings befindet sich diese Lagerung in einem umschlossenen Getriebegehäuse 5 und ist somit auch weitgehend vor abrasiven Verunreinigungen geschützt, so daß diese Reibungsveränderungen vernachlässigbar sind.

Als kostengünstige Alternative zur Blattfederlagerung 34, 35 haben sich in der Praxis auch Elastomere aus Kunst- oder Gummiwerkstoffen erwiesen, die zwischen der Lagerhülse 4 und der Antriebswelle 3 befestigt sind. Diese müssen dabei allerdings so beschaffen sein, daß sie in Drehrichtung bei maximaler Verdrehbarkeit biegeweich und in radialer und axialer Richtung relativ biegehart sind. Zum Antrieb der Lagerhülse 4 und des Zwischenstirnrades 21 sind auch Ketten, Zahnriemen oder vergleichbare Kraftübertragungsmittel einsetzbar. Dabei können auch separate Antriebe für die Lagerhülse 4 und die Antriebswelle 3 vorgesehen sein, wenn diese synchron betreibbar sind.

## Patentansprüche

1. Messvorrichtung zur Ermittlung der Durchsatzmenge eines Massestroms, insbesondere zur Messung eines Schüttgutstromes,
- mit einem Flügelradgehäuse (1) und einem darunterliegenden Meßgetriebegehäuse (5),
- mit einem von einer Antriebswelle (3) getragenen Flügelrad (2), das mit konstanter Drehzahl angetrieben und von dem Massestrom axial beaufschlagt wird, diesen umlenkt und ihm eine sowohl radiale als auch tangentiale Geschwindigkeitskomponente erteilt,
- wobei die Antriebswelle (3) ein Antriebsstirnrad (11) aufweist,
- - welches mit einem Zwischenstirnrad (21) in Eingriff ist,
- - - das von einem Treibstirnrad (20, 31) angetrieben wird
- - - und von einer Kraftmesseinrichtung (26) in seiner Lage gehalten wird
- und die Antriebswelle (3) von einer Lagerhülse (4) koaxial umgeben ist,
- - die von dem Meßgetriebegehäuse (5) bis in das Flügelradgehäuse (1) ragt,
- wobei die Lagerhülse (4) von separaten Antriebsmitteln (19, 32) angetrieben wird,
- die Antriebsmittel (19, 32) die Lagerhülse (4) mit einer Drehzahl antreiben, die der Drehzahl der Antriebswelle (3) entspricht und
- die Lagerhülse (4) in dem Meßgetriebegehäuse (5) durch eine Zweipunktlagerung (14) drehbar gelagert ist und dass mindestens zum Flügelradgehäuse (1) Abdichtmittel (15) vorgesehen sind, die ein Eindringen von Masseteilchen, insbesondere Schüttgutstäube, verhindern.

2. Messvorrichtung nach Anspruch 1, **dadurch gekennzeichnet, dass** die Lagerhülse (4) rohrförmig ausgebildet ist, und die Antriebswelle (3) koaxial umschließt und zur drehbaren Lagerung (12, 34, 35) und Führung der Antriebwelle (3) dient.

3. Messvorrichtung nach einem der vorhergehenden Ansprüche, **dadurch gekennzeichnet, dass** die Lagerhülse (4) mit einer Antriebsvorrichtung (13) verbunden ist, die von den separaten Antriebsmitteln (19, 32) mit konstanter Drehzahl angetrieben wird.

4. Messvorrichtung nach einem der vorhergehenden Ansprüche, **dadurch gekennzeichnet, dass** die Lagerhülse (4) und die Antriebswelle (3) von zwei separaten Antriebsmitteln (19, 21, 32) und einem gemeinsamen Antrieb (16, 30) angetrieben werden, wobei das Antriebsmittel der Antriebswelle (3) ein Zwischenstirnrad (21) und das separate Antriebsmittel ein oberes Zwischenstirnrad (32), ein oberes Treibstirnrad (19), ein Ketten- oder Zahnriemenantrieb ist.

5. Messvorrichtung nach einem der vorhergehenden Ansprüche, **dadurch gekennzeichnet, dass** das mit der Antriebswelle (3) verbundene Zwischenstirnrad (21) in einem radial auslenkbaren Kraftübertragungsarm (24) drehbar gelagert ist, der sich auf einer Kraftmessvorrichtung (26) abstützt.

6. Messvorrichtung nach einem der vorhergehenden Ansprüche, **dadurch gekennzeichnet, dass** als drehbare Lagerung der Antriebswelle (3) in der Lagerhülse (4) eine Gleitlagerung (12), eine Lagerung aus Federelementen (34, 35) oder eine Elastomerlagerung vorgesehen ist, wobei die Federelemente (34, 35) oder die Elastomere in Drehrichtung biegeweich und in Radial- und Axialrichtung biegesteif ausgebildet sind.

7. Messvorrichtung nach einem der vorhergehenden Ansprüche, **dadurch gekennzeichnet, dass** die Antriebswelle (3) zum Flügelradgehäuse (1) gegenüber der Lagerhülse (4) durch mindestens eine in Drehrichtung biegeweiche Gummibalgdichtung oder Labyrinthdichtung (33) verschlossen ist.

8. Messvorrichtung nach einem der vorhergehenden Ansprüche, **dadurch gekennzeichnet, dass** der Kraftübertragungsarm (24) um seinen Drehpunkt (27) durch reibungsarme Gleit-, Kugel- (25) oder ein Federelementenlager drehbar gelagert ist.

9. Messvorrichtung nach einem der vorhergehenden Ansprüche, **dadurch gekennzeichnet, dass** die Federelementenlagerung aus mindestens drei vertikal angeordneten Blattfederelementen (34, 35) besteht, die in einer horizontalen Ebene (36, 37) entweder mit der Antriebswelle (3) oder mit der lagerhülse (4) verbunden sind.

10. Messvorrichtung nach einem der vorhergehenden Ansprüche, **dadurch gekennzeichnet, dass** die Lagerung der Antriebswelle (3) durch mindestens zwei axial beabstandete Federelementlagerungen (34, 35) vorgesehen ist, wobei eine der Lagerungen (35) zwischen dem Antriebsstirnrad (14) und dem Legerhülbenetirnrad (13) vorgesehen ist.

## Claims

1. Measuring device for determining the throughput volume of a mass flow, in particular for measuring a bulk material stream,
- having an impeller housing (1) and an underlying measuring gear housing (5),
- having an impeller (2) that is supported by a drive shaft (3), said impeller being driven at a constant rotational speed and axially acted upon by the mass flow, diverting the latter and providing it with both a radial and a tangential velocity component,
- wherein the drive shaft (3) has a driving spur gear (11),
- - which is in engagement with an intermediate spur gear (21),
- - - which is driven by a driving spur gear (20, 31)
- - - and is held in its position by a force measuring device (26)
- and the drive shaft (3) is coaxially surrounded by a bearing sleeve (4),
- - which projects from the measuring gear housing (5) into the impeller housing (1),
- wherein the bearing sleeve (4) is driven by separate drive means (19, 32),
- the drive means (19, 32) drive the bearing sleeve (4) with a rotational speed which corresponds to the rotational speed of the drive shaft (3) and
- the bearing sleeve (4) is rotatably supported in the measuring gear housing (5) by a two-point bearing (14), and that sealing means (15) are provided at least up to the impeller housing (1), which prevent the infiltration of mass particles, in particular bulk material dust.

2. Measuring device according to claim 1, **characterized in that** the bearing sleeve (4) is of tubular shape and coaxially encloses the drive shaft (3) and serves as a rotatable support (12, 34, 35) and guide for the drive shaft (3).

3. Measuring device according to any one of the preceding claims, **characterized in that** the bearing sleeve (4) is connected to a drive mechanism (13) which is driven by the separate drive means (19, 32) at a constant rotational speed.

4. Measuring device according to any one of the preceding claims, **characterized in that** the bearing sleeve (4) and the drive shaft (3) are driven by two separate drive means (19, 21, 32) and a shared drivetrain (16, 30), wherein the drive means of the drive shaft (3) is an intermediate spur gear (21) and the separate drive means is an upper intermediate spur gear (32), an upper driving spur gear (19), a chain drive or a toothed belt drive.

5. Measuring device according to any one of the preceding claims, **characterized in that** the intermediate spur gear (21) connected to the drive shaft (3) is rotatably mounted in a radially deflectable force transmitting arm (24), which is supported on a force measuring device (26).

6. Measuring device according to any one of the preceding claims, **characterized in that** a sliding bearing (12), a bearing made of spring elements (34, 35) or an elastomer bearing is provided as rotatable support of the drive shaft (3) in the bearing sleeve (4), wherein the spring elements (34, 35) or the elastomers are flexible in the direction of rotation and are designed to be rigid in the radial and axial direction.

7. Measuring device according to any one of the preceding claims, **characterized in that** the drive shaft (3) is closed off from the impeller housing (1) with respect to the bearing sleeve (4) by at least one rubber bellows seal or labyrinth seal (33) that is flexible in the direction of rotation.

8. Measuring device according to any one of the preceding claims, **characterized in that** the force transmitting arm (24) is rotatably mounted about its pivot point (27) by means of low-friction sliding bearings, ball bearings (25) or a spring element bearing.

9. Measuring device according to any one of the preceding claims, **characterized in that** the spring element bearing consists of at least three vertically disposed leaf spring elements (34, 35), which are connected in a horizontal plane (36, 37) either with the drive shaft (3) or with the bearing sleeve (4).

10. Measuring device according to any one of the preceding claims, **characterized in that** the bearing of the drive shaft (3) is provided by at least two axially spaced spring element bearings (34, 35), wherein one of the bearings (35) is provided between the drive spur gear (14) and the bearing sleeve spur gear (13).

## Revendications

1. Dispositif de mesure pour la détermination du débit d'un flux massique, plus particulièrement pour la mesure d'un débit de produit en vrac,
- avec un boîtier de turbine (1) et un boîtier de transmission de mesure (5) situé en dessous,
- avec une turbine (2) supportée par un arbre d'entraînement (3), qui est entraînée avec une vitesse de rotation constante et qui est alimentée axialement par le flux massique, dévie celui-ci et lui confère une composante de vitesse aussi bien radiale que tangentielle,
- l'arbre d'entraînement (3) comprenant un pignon droit d'entraînement (11),
- qui est engrené avec un pignon droit intermédiaire (21),
- qui est entraîné par un pignon droit d'entraînement (20, 31)
- et est maintenu en position par un dispositif de mesure de force (26)
- et l'arbre d'entraînement (3) est entouré de manière coaxiale par un manchon de palier (4),
- qui dépasse du boîtier de transmission de mesure (5) jusqu'au boîtier de turbine (1),
- le manchon de palier (4) étant entraîné par des moyens d'entraînement (19, 32) séparés,
- les moyens d'entraînement (19, 32) entraînant le manchon de palier (4) avec une vitesse de rotation qui correspond à la vitesse de rotation de l'arbre d'entraînement (3) et
- le manchon de palier (4) étant logé de manière rotative dans le boîtier de transmission de mesure (5) à l'aide d'un palier à deux points (14) et en ce que, au moins par rapport au boîtier de turbine (1), sont prévus des moyens d'étanchéité (15) qui empêchent la pénétration de particules, plus particulièrement de poussières de produit en vrac.

2. Dispositif de mesure selon la revendication 1, **caractérisé en ce que** le manchon de palier (4) présente une forme tubulaire et entoure de manière coaxiale l'arbre d'entraînement (3) et permet le logement rotatif (12, 34, 35) et le guidage de l'arbre d'entraînement (3).

3. Dispositif de mesure selon l'une des revendications précédentes, **caractérisé en ce que** le manchon de palier (4) est relié avec un dispositif d'entraînement (13) qui est entraîné par les moyens d'entraînement (19, 32) séparés avec une vitesse de rotation constante.

4. Dispositif de mesure selon l'une des revendications précédentes, **caractérisé en ce que** le manchon de palier (4) et l'arbre d'entraînement (3) sont entraînés par deux moyens d'entraînement (19, 21, 32) séparés et un entraînement commun (16, 30), le moyen d'entraînement de l'arbre d'entraînement (3) étant un pignon droit intermédiaire (21) et le moyen d'entraînement séparé étant un pignon droit intermédiaire supérieur (32), un pignon droit d'entraînement supérieur (19), un entraînement à chaîne ou un entraînement à courroie dentée.

5. Dispositif de mesure selon l'une des revendications précédentes, **caractérisé en ce que** le pignon droit intermédiaire (21) relié avec l'arbre d'entraînement (3) est logé de manière rotative dans un bras de transmission de force (24) pouvant être dévié radialement, qui s'appuie contre un dispositif de mesure de force (26).

6. Dispositif de mesure selon l'une des revendications précédentes, **caractérisé en ce que**, en tant que logement rotatif de l'arbre d'entraînement (3) dans le manchon de palier (4), un palier lisse (12), un palier constitué d'éléments à ressorts (34, 35) ou un palier élastomère est prévu, les éléments à ressorts (34, 35) ou les élastomères étant flexibles dans le sens de rotation et étant rigides dans les directions radiale et axiale.

7. Dispositif de mesure selon l'une des revendications précédentes, **caractérisé en ce que** l'arbre d'entraînement (3) est étanchéifiée par rapport au boîtier de turbine (1) vis-à-vis du manchon de palier (4) par au moins un joint d'étanchéité à soufflets en caoutchouc ou un joint d'étanchéité à labyrinthe (33) flexible dans le sens de rotation.

8. Dispositif de mesure selon l'une des revendications précédentes, **caractérisé en ce que** le bras de transmission de forces (24) est logé de manière rotative autour de son centre de rotation (27) par des paliers lisses, sphériques (25) à faible friction ou un palier à éléments à ressorts.

9. Dispositif de mesure selon l'une des revendications précédentes, **caractérisé en ce que** le palier à éléments à ressorts est constitué d'au moins trois éléments à ressorts à lames (34, 35) disposés verticalement, qui sont reliés, dans un plan horizontal (36, 37), soit avec l'arbre d'entraînement (3) soit avec le manchon de palier (4).

10. Dispositif de mesure selon l'une des revendications précédentes, **caractérisé en ce que** le logement de l'arbre d'entraînement (3) est prévu par au moins deux paliers à éléments à ressorts (34, 35) distants radialement entre eux, un des paliers (35) étant prévu entre le pignon droit d'entraînement (14) et le pignon droit de manchon de palier (13).
